# DEMANDE DE BREVET EUROPEEN

(11) **EP 2 982 278 A1**
(43) Date de publication de la demande: **10.02.2016**
(21) Numéro de dépôt: 15176001.4
(22) Date de dépôt: 09.07.2015
(51) Int. Cl.: A47J 43/07, A47J 47/01

(54) **DISPOSITIF POUR LA REALISATION ET LE DRESSAGE D'UNE PREPARATION ALIMENTAIRE**

(30) Priorité: 08.08.2014 FR 1457706
(71) Demandeur: SEB S.A., 69130 Ecully (FR)
(72) Inventeur: BOURGEOIS-JACQUET, Jean-Marie, 21800 SENNECEY-LES-DIJON (FR)
(74) Mandataire: Bourrières, Patrice

(57) **Abrégé**

Dispositif pour la réalisation et le dressage d'une préparation alimentaire comportant un récipient (1) muni d'une extrémité supérieure ouverte permettant l'introduction successive des ingrédients à mélanger et d'un mixeur plongeant et/ou d'un fouet, le récipient (1) comportant une ouverture à son extrémité inférieure, caractérisé en ce que ledit dispositif comporte des moyens (6) permettant de fermer de manière étanche ladite ouverture et des moyens (6) permettant de mettre en communication ladite ouverture avec une douille pour la distribution de la préparation alimentaire.

## Description

La présente invention concerne le domaine technique général des dispositifs pour la réalisation et le dressage d'une préparation alimentaire comportant un récipient muni d'une extrémité supérieure ouverte permettant l'introduction successive des ingrédients à mélanger et d'un mixeur plongeant et/ou d'un fouet, et une extrémité inférieure comportant une ouverture pour la distribution de la préparation.

Il est connu, de la demande de brevet FR 2 982 780, un dispositif pour le dressage d'une préparation alimentaire comportant un récipient avec une ouverture à son extrémité supérieure permettant l'introduction de la préparation alimentaire, le récipient étant fermé à son extrémité inférieure par un fond comprenant une ouverture munie d'une douille permettant l'éjection progressive de la préparation alimentaire contenue dans le récipient.

Cependant, ce dispositif ne permet pas de réaliser directement la préparation dans le récipient au moyen d'un pied de mixage ou d'un fouet. En effet, l'ouverture dans le fond du récipient laisserait s'échapper les ingrédients lorsque ces derniers sont à l'état liquide ou de poudre. En conséquence, un tel dispositif réclame l'élaboration de la préparation alimentaire dans un récipient distinct du dispositif de dressage, puis le transfert de la préparation alimentaire vers le dispositif de dressage. Il en résulte la nécessité de nettoyer les deux récipients : le premier récipient ayant servi à l'élaboration de la préparation alimentaire et le récipient du dispositif de dressage.

L'invention qui suit vise à pallier ces inconvénients en proposant un dispositif pour le mixage et le dressage d'une préparation comportant un seul récipient servant à la fois au mixage de la préparation alimentaire au moyen d'un mixeur plongeant et au dressage de la préparation. Un autre but de la présente invention est de proposer un dispositif qui soit simple et économique à réaliser.

Le but de l'invention est atteint par un dispositif pour la réalisation et le dressage d'une préparation alimentaire comportant un récipient muni d'une extrémité supérieure ouverte permettant l'introduction successive des ingrédients à mélanger et d'un mixeur plongeant et/ou d'un fouet, le récipient comportant une ouverture à son extrémité inférieure, caractérisé en ce que le dispositif comporte des moyens permettant de fermer de manière étanche l'ouverture et des moyens permettant de mettre en communication l'ouverture avec une douille pour la distribution de la préparation alimentaire.

Un tel dispositif permet à l'utilisateur de réaliser la préparation directement dans le récipient, cette opération s'effectuant en fermant de manière étanche l'ouverture présente dans le fond du récipient, puis en versant les ingrédients nécessaires à la préparation et en les mélangeant au moyen du mixeur plongeant ou du fouet. Lorsque la préparation est prête, l'utilisateur peut alors utiliser ce même récipient pour effectuer le dressage de la préparation en mettant en communication l'ouverture présente dans le fond du récipient avec la douille permettant l'éjection progressive de la préparation.

Selon une autre caractéristique de l'invention, la douille présente une paroi périphérique munie de fentes dont la forme et la position sont adaptées pour mettre en forme la préparation traversant la douille selon une géométrie décoratrice particulière.

Selon une autre caractéristique de l'invention, l'ouverture du récipient est fermée à son extrémité inférieure par un fond comportant un canal de distribution débouchant sur la douille et le dispositif comporte un élément obturateur amovible venant fermer le canal de distribution.

Une telle construction présente l'avantage d'être simple et économique à mettre en aeuvre.

Selon une autre caractéristique de l'invention, l'élément obturateur est mobile sur le récipient entre une position fermée dans laquelle il obture le canal de distribution et une position ouverte dans laquelle la préparation peut passer au travers de la douille.

Une telle caractéristique présente l'avantage de procurer une grande ergonomie d'utilisation en éliminant le risque de perte de l'élément obturateur, ce dernier restant solidaire du récipient même lorsqu'il occupe la position ouverte.

Selon encore une autre caractéristique de l'invention, le fond du récipient est porté par une embase montée de manière amovible sur une enveloppe cylindrique du récipient.

Une telle caractéristique permet de simplifier le lavage du récipient en permettant le démontage de l'embase.

Selon encore une autre caractéristique de l'invention, l'embase comprend une languette qui est mobile transversalement au canal de distribution et qui vient obturer le canal de distribution lorsqu'elle occupe une position fermée, la languette comprenant un orifice qui est amené en regard du canal de distribution lorsque la languette occupe une position ouverte.

Selon encore une autre caractéristique de l'invention, la douille est portée par un capuchon monté de manière amovible sur l'embase du récipient.

Selon une autre caractéristique de l'invention, la douille est montée de manière amovible sur le récipient.

Une telle caractéristique présente l'avantage de simplifier le lavage de la douille.

Selon encore une autre caractéristique de l'invention, le dispositif comporte plusieurs douilles de formes différentes pouvant être montées sur le récipient.

Une telle caractéristique permet de réaliser différents types de motifs décoratifs avec le même dispositif en changeant simplement la forme de la douille.

Selon encore une autre caractéristique de l'invention, le récipient comporte un piston amovible pouvant être déplacé à l'intérieur du récipient pour presser la préparation au travers de la douille, le piston présentant une forme complémentaire de celle du récipient et comprenant un bord périphérique venant au contact du récipient.

Une telle caractéristique présente l'avantage de procurer une grande ergonomie d'utilisation.

Selon encore une autre caractéristique de l'invention, le piston est solidaire d'une tige montée coulissante sur un couvercle amovible venant se fixer sur l'extrémité supérieure du récipient.

Selon encore une autre caractéristique de l'invention, le couvercle comporte une poignée de préhension qui s'étend à l'extérieur du récipient lorsque le couvercle ferme l'extrémité supérieure du récipient.

Selon encore une autre caractéristique de l'invention, la poignée de préhension comporte une gâchette qui, lorsqu'elle est pressée, fait avancer la tige en direction du fond du récipient.

Selon encore une autre caractéristique de l'invention, le diamètre du récipient est compris entre 7 et 10 cm et est préférentiellement de l'ordre de 8 cm.

L'invention concerne également un kit pour la réalisation et le dressage d'une préparation alimentaire, caractérisé en ce qu'il comporte un boitier moteur associé à un pied de mixage et/ou à un fouet ainsi qu'un dispositif pour la réalisation et le dressage d'une préparation alimentaire tel que précédemment décrit.

Selon une autre caractéristique de l'invention, le pied de mixage comporte une cloche de protection entourant un outil de travail rotatif, le diamètre intérieur du récipient étant supérieur au diamètre extérieur de la cloche de protection mais inférieur à 1,5 fois le diamètre extérieur de la cloche de protection.

Selon encore une autre caractéristique de l'invention, la hauteur du récipient est inférieure à la longueur du pied de mixage.

L'invention concerne également un procédé pour la réalisation et le dressage d'une préparation alimentaire caractérisé en ce qu'il comporte les étapes successives suivantes :
- insertion des ingrédients nécessaires à la réalisation de la préparation dans le récipient du dispositif tel que précédemment décrit, cette insertion étant réalisée par l'extrémité supérieure ouverte du récipient après avoir fermé l'ouverture située à l'extrémité inférieure du récipient,
- mélange des ingrédients dans le récipient en y plongeant, par l'extrémité supérieure ouverte, un pied de mixage ou un fouet entrainé en rotation par un boitier moteur,
- mise en communication de l'ouverture inférieure du récipient avec la douille pour la distribution de la préparation alimentaire,
- expulsion de la préparation alimentaire par la douille.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue de face d'un mixeur plongeant disposé dans le récipient du dispositif pour le mixage et le dressage selon un mode particulier de réalisation de l'invention ;
- la figure 2 est une vue de face du dispositif pour le mixage et le dressage de la figure 1 équipé d'un couvercle de fermeture ;
- la figure 3 est une vue de dessus du dispositif pour le mixage et le dressage de la figure 2 ;
- la figure 4 est une vue en perspective éclatée du dispositif pour le mixage et le dressage de la figure 2 ;
- les figures 5 et 6 sont respectivement des vues en coupe selon la ligne V-V et selon la ligne VI-VI du dispositif illustré sur la figure 3, lorsque le piston occupe une position haute dans le récipient.
- les figures 7 et 8 sont respectivement des vues en coupe selon la ligne V-V et selon la ligne VI-VI de la figure 3 lorsque le piston occupe une position basse dans le récipient.

Seuls les éléments nécessaires à la compréhension de l'invention ont été représentés. Pour faciliter la lecture des dessins, les mêmes éléments portent les mêmes références d'une figure à l'autre.

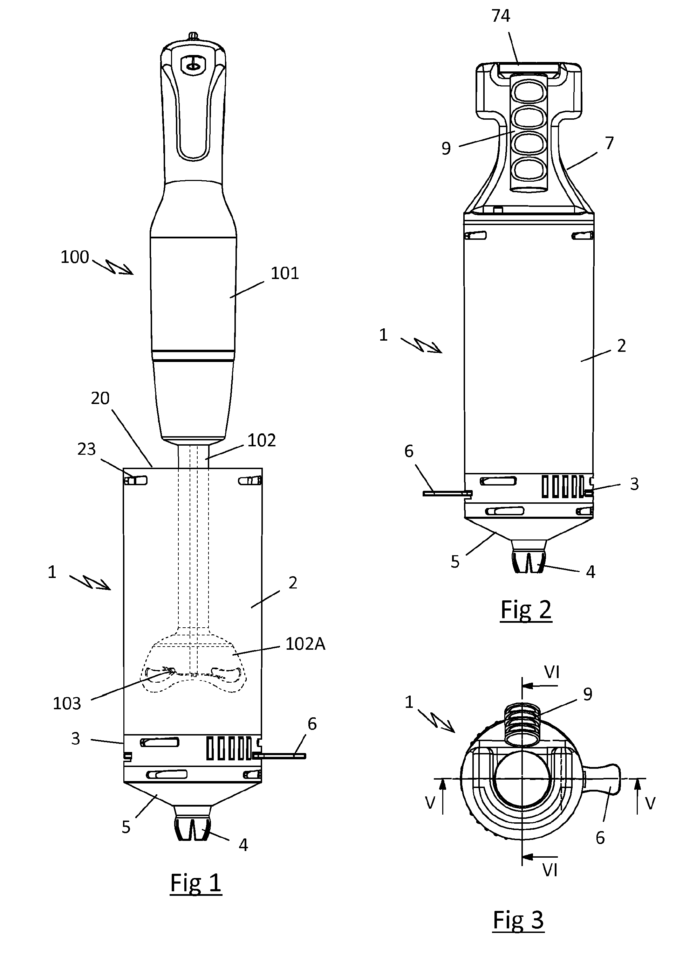

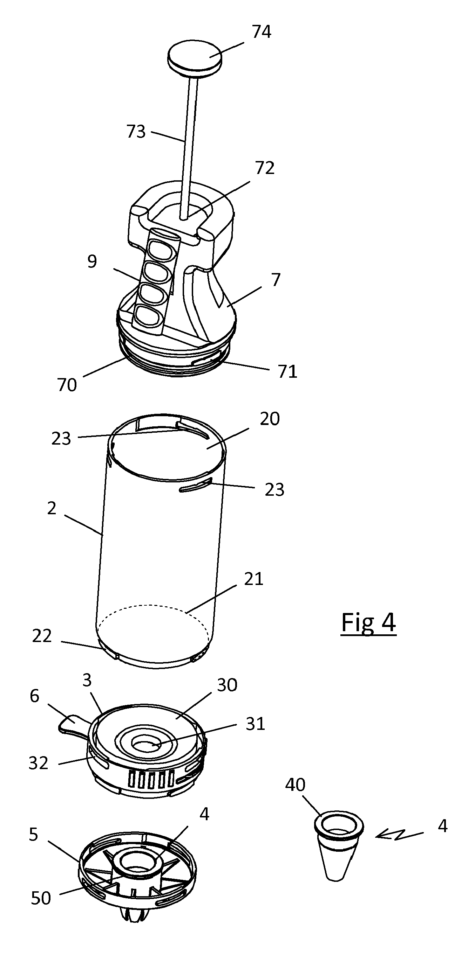

Les figures 1 à 4 représentent un dispositif pour le mixage et le dressage d'une préparation alimentaire destiné à être utilisé avec un mixeur plongeant 100, illustré uniquement sur la figure 1, ou avec un fouet électrique, non représenté sur les figures, le dispositif comportant un récipient 1 comprenant une enveloppe 2 transparente, avantageusement tubulaire, comportant une extrémité supérieure 20 ouverte par laquelle le mixeur plongeant 100 ou le fouet électrique peut être introduit dans le récipient 1.

Le mixeur plongeant 100 comporte, de manière connue en soi, un boîtier moteur 101 accouplé à un pied de mixage 102, ce dernier présentant la forme d'un fût tubulaire, réalisé avantageusement en acier inox ou en matière plastique, et comportant une extrémité supérieure d'accouplement évasée assurant le montage amovible du pied de mixage 102 sur le boîtier moteur 101.

La partie inférieure du pied de mixage 102 comporte une cloche de protection 102A présentant un diamètre extérieur de l'ordre de 7 cm, cette cloche de protection 102A renfermant un outil de travail 103 entraîné en rotation par le boîtier moteur 101.

De manière avantageuse, le diamètre intérieur de l'enveloppe 2 du récipient 1 est légèrement plus grand que le diamètre extérieur de la cloche de protection 102A du pied de mixage, la différence de diamètre entre ces derniers étant préférentiellement inférieure à 2 cm, de manière à ce que le pied de mixage 102 soit guidé sensiblement axialement dans le récipient 1 lorsqu'il est introduit par l'extrémité supérieure 20 ouverte de ce dernier. La hauteur de l'enveloppe 2 du récipient est avantageusement inférieure à la longueur du pied de mixage 102, l'enveloppe 2 présentant par exemple une hauteur de 18 cm pour un diamètre intérieur de l'ordre de 8 cm alors que le pied de mixage 102 présente une longueur de l'ordre de 20 cm.

Comme on peut le voir sur les figures 2 à 8, l'enveloppe 2 du récipient 1 comporte une ouverture 21 à son extrémité inférieure qui est fermée par une embase 3 amovible comprenant une surface supérieure 30 concave définissant le fond du récipient, l'embase 3 comportant un canal de distribution 31 longitudinal débouchant d'une part au centre du fond 30 et d'autre en regard d'une douille 4 pour la distribution de la préparation. La douille 4 est supportée par un capuchon 5 monté de manière amovible sur l'extrémité inférieure de l'embase 3 et comporte avantageusement une paroi périphérique munie de fentes permettant mettre en forme la préparation traversant la douille 4 de telle sorte que cette dernière présente une section transversale en forme d'étoile.

De manière préférentielle, l'embase 3 est fixée à l'extrémité inférieure de l'enveloppe 2 par une liaison de type baïonnette, l'extrémité inférieure de l'enveloppe 2 comprenant à cet effet des ergots de verrouillage 22 venant s'engager dans des nervures 32 ménagées sur la partie supérieure de l'embase 3.

Le capuchon 5 est également fixé à l'extrémité inférieure de l'embase 3 par une liaison de type baïonnette et la douille 4 est avantageusement montée de manière amovible sur le capuchon 5 de manière à être interchangeable, le dispositif comportant plusieurs douilles 4 de formes différentes pouvant s'adapter sur le capuchon 5.

Chaque douille 4 comprend un corps creux cylindrique venant s'insérer dans une ouverture 50 centrale du capuchon 5, le corps de la douille 4 comprenant une collerette 40 à son extrémité supérieure venant reposer en bordure de la sortie du canal de distribution 31 de manière à être prise en sandwich entre le capuchon 5 et l'embase 3 lorsque le capuchon 5 est fixé à l'extrémité inférieure de l'embase 3.

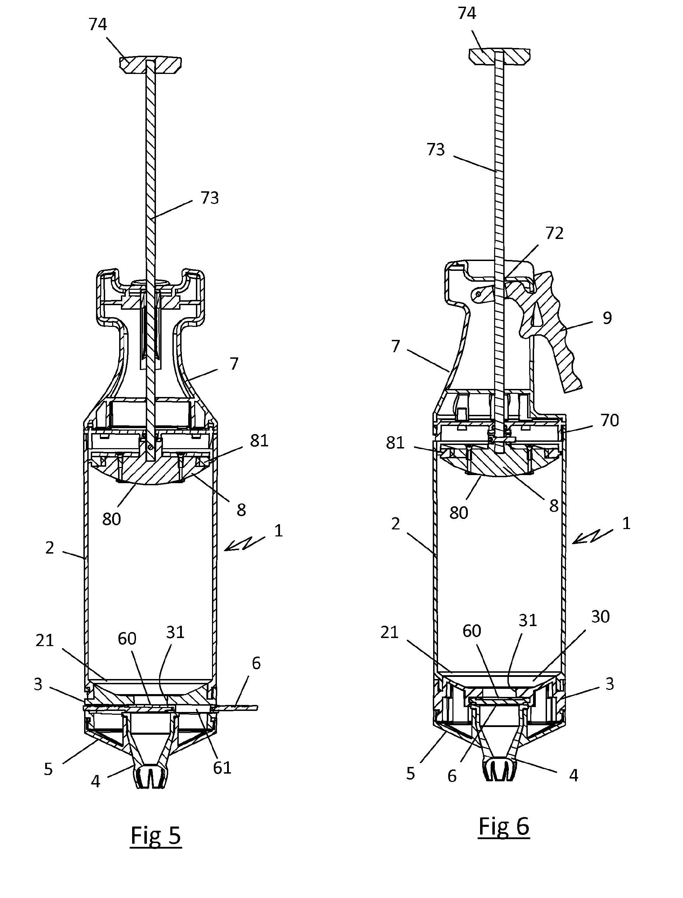

Plus particulièrement selon l'invention, le dispositif comporte des moyens permettant de fermer de manière étanche l'ouverture 21 inférieure du récipient 1, ces moyens étant avantageusement constitués par une partie pleine 60 en élastomère portée par une languette 6 montée mobile en translation sur l'embase 3, la partie pleine 60 de la languette 6 venant fermer de manière étanche le canal de distribution 31 en s'étendant en travers de ce dernier lorsque la languette 6 occupe une position fermée illustrée sur les figures 5 et 6.

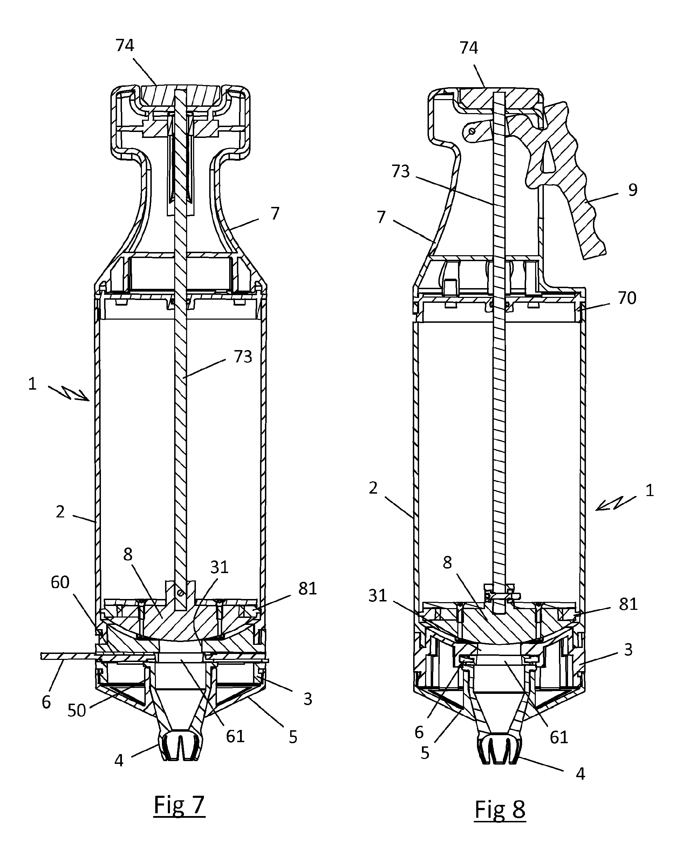

Le dispositif comporte également des moyens permettant de mettre en communication l'ouverture 21 inférieure du récipient 1 avec la douille 4, ces moyens étant avantageusement constitués par un orifice 61 ménagé dans la languette 6 qui est amené en regard du canal de distribution 31 lorsque la languette 6 occupe une position ouverte illustrée sur les figures 7 et 8.

Comme on peut le voir sur ces figures, la languette 6 coulisse transversalement au canal de distribution 31 et comporte à chacune de ses deux extrémités longitudinales une zone de préhension faisant alternativement saillie au travers d'une fente latérale de l'embase 3 et permettant d'amener la languette 6 dans la position fermée ou dans la position ouverte.

De manière préférentielle, le dispositif comporte un couvercle 7 amovible venant fermer l'extrémité supérieure du récipient 1, ce couvercle 7 comportant un corps comprenant une jupe inférieure 70 munie d'ergots de verrouillage 71 venant coopérer avec des rainures 23 ménagées sur la surface interne de l'enveloppe 2 pour établir une liaison de type baïonnette.

Le corps du couvercle 7 présente avantageusement dans sa partie supérieure la forme d'une poignée et comprend un orifice 72 venant dans l'axe longitudinal du récipient 1 dans lequel une tige 73 est montée coulissante. La tige 73 comprend une extrémité supérieure recevant un embout de préhension 74 et comporte une extrémité inférieure solidaire d'un piston 8 comprenant une partie centrale rigide possédant une surface inférieure 80 présentant une forme convexe complémentaire du fond 30 concave du récipient 1, la partie centrale supportant un joint périphérique 81 annulaire venant au contact de la paroi interne de l'enveloppe 2 lorsque le piston 8 est introduit dans le récipient 1.

Le couvercle 7 comporte également une manette 9 montée pivotante qui est ramenée par un ressort de rappel, non représenté sur les figures, dans une position de repos illustrée sur les figures 6 et 8 dans laquelle la manette 9 empêche, de manière connue en soi, le déplacement de la tige 73 sur le couvercle 7 dans le sens de la remontée du piston 8 par un effet de coincement. A l'inverse, chaque pression sur la manette 9 entraine la tige 73 en déplacement vers le bas d'un pas prédéterminé. Un tel mécanisme d'entrainement est par exemple bien connu dans l'industrie du bâtiment pour les pistolets manuels à mastic.

Le fonctionnement du dispositif ainsi réalisé va maintenant être décrit.

Lorsque l'utilisateur souhaite réaliser une préparation, il prend le récipient 1 avec l'embase 3 assemblée à l'extrémité inférieure de l'enveloppe 2, ainsi que cela est illustré sur la figure 1, et amène la languette 6 dans la position fermée illustrée sur les figures 5 et 6 de manière à avoir une fermeture étanche de l'ouverture 21 du récipient par le biais de la fermeture du canal de distribution 31.

L'utilisateur insère ensuite les ingrédients dans le récipient 1 par son extrémité supérieure 20 ouverte, puis les mixe au moyen du pied de mixage 102 en insérant directement ce dernier par l'extrémité supérieure ouverte 20, la forme concave du fond 30 du récipient permettant à la fois de centrer la cloche de protection 102A dans le fond 30 du récipient et d'éviter que l'outil de travail ne vienne au contact du fond 30.

Bien entendu, en fonction de la préparation à réaliser, l'utilisateur pourra également utiliser un fouet en lieu et place du pied de mixage. L'usage d'un tel fouet sera par exemple utile pour la réalisation de crème pâtissière, le fouet pouvant avantageusement être constitué par un accessoire accouplé sur le boitier moteur à la place du pied de mixage.

Une fois la préparation obtenue avec la texture souhaitée dans le récipient 1, l'utilisateur peut extraire le pied de mixage 102 ou le fouet puis fermer l'extrémité supérieure du récipient 1 au moyen du couvercle 7, avec le piston 8 disposé en position haute, ainsi que cela est illustré sur les figures 5 et 6.

En fonction des motifs à réaliser, l'utilisateur peut démonter le capuchon 5 de l'embase, tout en laissant l'embase 3 accouplée à l'enveloppe 2 du récipient, pour y installer la douille 4 la plus adaptée.

Le dispositif est alors disponible pour faire le dressage de la préparation, l'utilisateur n'ayant qu'à déplacer la languette 6 vers la position ouverte de manière à permettre le passage de la préparation du canal de distribution 31 vers la douille 4, puis à presser régulièrement sur la manette 9 de manière à faire sortir progressivement la préparation au travers de la douille 4.

On obtient ainsi un dispositif présentant l'avantage de permettre de réaliser à la fois le mélange et le dressage de la préparation alimentaire dans un même récipient. On évite ainsi tout transfert d'un récipient à un autre, ce qui permet de gagner du temps et de limiter la quantité de récipients à nettoyer.

De plus, l'utilisation d'un même récipient pour le mélange et le dressage de la préparation permet de limiter la manipulation de la préparation et d'avoir ainsi un meilleur aspect de la préparation.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, la douille pourra être fixée directement sur la languette, au niveau de son orifice de passage, la douille accompagnant alors la languette dans son mouvement en translation. Dans cette variante de réalisation, l'embase pourra être démunie de capuchon inférieur ou être équipée d'un capuchon comprenant une ouverture oblongue permettant le mouvement en translation de la douille lors du déplacement de la languette entre la position fermée et la position ouverte.

Ainsi, dans une autre variante de réalisation non représentée, la languette assurant l'obturation du canal de distribution pourra être remplacée par un disque mobile en rotation entre une position ouverte, dans laquelle un orifice du disque se trouve en regard du canal de distribution, et une position fermée, dans laquelle une partie pleine du disque se trouve en regard du canal de distribution.

Dans encore une variante de réalisation non représentée, le dispositif pourra comporter deux embases interchangeables, la première embase venant fermer de manière étanche l'ouverture inférieure du récipient et la deuxième embase étant munie d'une douille pour la distribution de la préparation alimentaire. Dans cette variante, le changement d'embase s'effectuera en plaçant le récipient en position retournée après avoir fermé l'extrémité supérieure du récipient au moyen du couvercle.

Dans une autre variante de réalisation non représentée, l'embase pourra comporter un canal de distribution et une douille disposée directement dans le prolongement du canal de distribution, sans interposition de moyens de fermeture du canal de distribution et la fermeture étanche de l'extrémité inférieure du récipient s'effectuera avec un capuchon amovible venant obturer l'orifice de sortie de la douille. De manière préférentielle, le capuchon sera fixé sur l'embase du récipient et comportera un socle présentant une forme assurant le maintien vertical du récipient lorsque le capuchon repose sur un plan de travail et que le récipient est fixé sur le capuchon. Dans cette variante de réalisation, le capuchon servira donc à la fois à obturer la douille et à maintenir verticalement le récipient, permettant d'effectuer l'opération de mixage en faisant reposer le récipient sur une table, par l'intermédiaire du capuchon, sans avoir à le soutenir avec la main.

## Revendications

1. Dispositif pour la réalisation et le dressage d'une préparation alimentaire comportant un récipient (1) muni d'une extrémité supérieure (20) ouverte permettant l'introduction successive des ingrédients à mélanger et d'un mixeur plongeant (100) et/ou d'un fouet, le récipient (1) comportant une ouverture (21) à son extrémité inférieure, ledit dispositif comportant des moyens (3, 6) permettant de fermer de manière étanche ladite ouverture (21) et des moyens (3, 6) permettant de mettre en communication l'ouverture (21) avec une douille (4) pour la distribution de la préparation alimentaire, la douille (4) étant montée de manière amovible sur le récipient (1), **caractérisé en ce qu'**il comporte plusieurs douilles (4) de formes différentes pouvant être montées sur le récipient (1).

2. Dispositif selon la revendication 1, **caractérisé en ce que** l'ouverture (21) du récipient (1) est fermée à son extrémité inférieure par un fond (30) comportant un canal de distribution (31) débouchant sur la douille (4) et **en ce que** le dispositif comporte un élément obturateur (6) amovible venant fermer ledit canal de distribution (31).

3. Dispositif selon la revendication 2, caractérisé en ce l'élément obturateur (6) est mobile sur le récipient (1) entre une position fermée dans laquelle il obture le canal de distribution (31) et une position ouverte dans laquelle la préparation peut passer au travers de la douille (4).

4. Dispositif selon l'une quelconque des revendications 1 à 3, **caractérisé en ce que** le fond (30) du récipient est porté par une embase (3) montée de manière amovible sur une enveloppe (2) cylindrique du récipient (1).

5. Dispositif selon la revendication 4, caractérisé que l'embase (3) comprend une languette (6) qui est mobile transversalement au canal de distribution (31) et qui vient obturer le canal de distribution (31) lorsqu'elle occupe une position fermée et en ce que ladite languette (6) comprend un orifice (61) qui est amené en regard du canal de distribution (31) lorsque la languette (6) occupe une position ouverte.

6. Dispositif selon l'une quelconque des revendications 4 à 5, **caractérisé en ce que** la douille (4) est portée par un capuchon (5) monté de manière amovible sur l'embase (3) du récipient (1).

7. Dispositif selon l'une quelconque des revendications 1 à 6, **caractérisé en ce que** le récipient (1) comporte un piston (8) amovible pouvant être déplacé à l'intérieur du récipient (1) pour presser la préparation au travers de la douille (4), le piston (8) présentant une forme complémentaire de celle du récipient (1) et comprenant un bord périphérique (81) venant au contact du récipient (1).

8. Dispositif selon l'une quelconque des revendications 1 à 7, **caractérisé en ce que** le piston (8) est solidaire d'une tige (73) montée coulissante sur un couvercle (7) amovible venant se fixer sur l'extrémité supérieure du récipient (1).

9. Kit pour la réalisation et le dressage d'une préparation alimentaire, **caractérisé en ce qu'**il comporte un boitier moteur (101) associé à un pied de mixage (102) et/ou à un fouet ainsi qu'un dispositif selon l'une quelconque des revendications 1 à 8.

10. Kit selon la revendication 9, **caractérisé en ce que** le pied de mixage (102) comporte une cloche de protection (102A) entourant un outil de travail (103) rotatif et **en ce que** diamètre intérieur du récipient (1) est supérieur au diamètre extérieur de la cloche de protection (102A) mais inférieur à 1,5 fois le diamètre extérieur de la cloche de protection (102A).

11. Procédé pour la réalisation et le dressage d'une préparation alimentaire, **caractérisé en ce qu'**il comporte les étapes successives suivantes
- insertion des ingrédients nécessaires à la réalisation de la préparation dans le récipient (1) du dispositif selon l'une quelconque des revendications 1 à 10, ladite insertion étant réalisée par l'extrémité supérieure (20) ouverte du récipient (1) après avoir fermé l'ouverture (21) située à l'extrémité inférieure du récipient (1),
- mélange des ingrédients dans ledit récipient (1) en y plongeant, par l'extrémité supérieure (20) ouverte, un pied de mixage (102) ou un fouet entrainé en rotation par un boitier moteur (101),
- mise en communication de l'ouverture (21) inférieure du récipient (1) avec la douille (4) pour la distribution de la préparation alimentaire,
- expulsion de la préparation alimentaire par la douille (4).
